(19) **Europäisches Patentamt**

**European Patent Office**

**Office européen des brevets**

(11) **EP 1 073 577 B1**

(12) **EUROPÄISCHE PATENTSCHRIFT**

(45) Veröffentlichungstag und Bekanntmachung des Hinweises auf die Patenterteilung:
**25.09.2002  Patentblatt 2002/39**

(21) Anmeldenummer: **00906214.2**

(22) Anmeldetag: **20.01.2000**

(51) Int Cl.⁷: **B62D 6/00**, B62D 5/00

(86) Internationale Anmeldenummer:
**PCT/EP00/00424**

(87) Internationale Veröffentlichungsnummer:
**WO 00/050290 (31.08.2000 Gazette 2000/35)**

(54) **REGELUNGSSYSTEM**

REGULATING SYSTEM

SYSTEME DE REGULATION

(84) Benannte Vertragsstaaten:
**DE FR GB**

(30) Priorität: **24.02.1999  DE 19907792**

(43) Veröffentlichungstag der Anmeldung:
**07.02.2001  Patentblatt 2001/06**

(73) Patentinhaber: **DaimlerChrysler AG
70567 Stuttgart (DE)**

(72) Erfinder:
- **BÖHRINGER, Michael
  D-71334 Waiblingen (DE)**
- **ECKSTEIN, Lutz
  D-70563 Stuttgart (DE)**

(56) Entgegenhaltungen:
**DE-A- 19 801 974**

**Beschreibung**

Die Erfindung betrifft ein Regelungssystem zur Kopplung von zwei Stellgliedern hinsichtlich Stellposition und Stellkraft mit den Merkmalen des Oberbegriffes des Anspruches 1.

Aus der EP 0 591 890 A1 ist ein Regelungssystem der eingangs genannten Art bekannt, das als Synchronisationsregelungssystem ausgebildet ist und einen Steuerknüppel eines Piloten und einen Steuerknüppel eines CO-Piloten hinsichtlich Stellposition und Stellkraft synchronisiert bzw. koppelt. Das bekannte Synchronisationsregelungssystem weist dazu zwei identisch aufgebaute Kraftregelkreise auf. In jedem dieser Kraftregelkreise wird mit dem als Stellglied dienenden Steuerknüppel ein Kraft-Istwertgeber zur Erzeugung eines mit am Steuerknüppel herrschenden Kräften korrelierenden Kraft-Istwertsignals sowie ein Positions-Istwertgeber zur Erzeugung eines mit der am Steuerknüppel eingestellten Stellposition korrelierenden Positions-Istwertsignals betätigt. Jeder der Kraftregelkreise weist außerdem einen Kraftsollwertgenerator auf, der in Abhängigkeit eines vorgegebenen Zusammenhanges zwischen Stellpositionen und Stellkräften aus dem Positions-Istwertsignal ein Kraft-Sollwertsignal generiert. Darüber hinaus weist jeder Kraftregelkreis einen Kraftregler auf, der in Abhängigkeit der an einem Eingang des Kraftreglers anliegenden Kraftsignale einen Kraftsteller betätigt, derart, daß sich am Steuerknüppel der vorgegebene Zusammenhang zwischen Stellpositionen und Stellkräften einstellt. Die beiden Kraftregelkreise sind über ihre Kraft-Istwertsignale miteinander gekoppelt, das heißt die Kraft-Istwertsignale des einen (ersten) Kraftregelkreises werden zusätzlich dem Eingang des Kraftreglers des anderen (zweiten) Kraftregelkreises zugeleitet und die Kraft-Istwertsignale des zweiten Kraftregelkreises werden zusätzlich dem Eingang des Kraftreglers des ersten Kraftregelkreises zugeleitet. Mit Hilfe dieses Synchronisationsregelungssystems kann der eine Steuerknüppel schnell und genau die am anderen Steuerknüppel eingestellte Position identisch einnehmen. Außerdem können die am einen Steuerknüppel eingebrachten Kräfte bzw. Momente am anderen Steuerknüppel sehr exakt und direkt wahrgenommen werden. Die Synchronisation der beiden Steuerknüppel ist hinsichtlich ihrer Direktheit, Schnelligkeit und Genauigkeit einer spielfreien mechanischen Kopplung gleichwertig.

Die vorliegende Erfindung beschäftigt sich mit dem Problem, für ein Regelungssystem der eingangs genannten Art eine Ausführungsform anzugeben, die vielseitig verwendbar ist.

Dieses Problem wird erfindungsgemäß durch ein Regelungssystem mit den Merkmalen des Anspruches 1 gelöst.

Die Erfindung beruht auf dem allgemeinen Gedanken, die beiden Kraftregelkreise über einen Proportionalitätsfaktor miteinander zu koppeln. Mit Hilfe dieser Maßnahme wird eine Kraftübersetzung zwischen den beiden Stellgliedern erreicht, die es ermöglicht, das Regelungssystem vielseitig zu verwenden.

Beispielsweise kann das erfindungsgemäß ausgestaltete Regelungssystem bei einem Greifarm verwendet werden, der eine manuell betätigbare Handhabe und eine Greifzange zum Greifen schwerer Gegenstände aufweist. Die Handhabe bildet dabei das erste Stellglied und ist dem einen Kraftregelkreis zugeordnet, während die Greifzange das zweite Stellglied bildet, das dem anderen Kraftregelkreis zugeordnet ist. Über die Handhabe kann ein Verwender die Greifzange zum Greifen eines Gegenstandes betätigen. Das erfindungsgemäße Regelungssystem kann dabei so eingestellt sein, daß eine manuell in die Handhabe eingeleitete, relativ kleine Kraft an der Greifzange eine relativ große Greifkraft erzeugt.

Besonders vorteilhaft ist es, wenn das erfindungsgemäße Regelungssystem zur Ausbildung eines Steer-by-wire-Lenksystems in einem Kraftfahrzeug verwendet wird. Das Stellglied des einen Kraftregelkreises wird dabei durch die Lenkhandhabe, z.B. Lenkhandrad, des Fahrzeuges gebildet, während das Stellglied des zweiten Kraftregelkreises durch die gelenkten Fahrzeugräder gebildet wird. Durch die eingangs beschriebene Direktheit, Schnelligkeit und Genauigkeit der Kopplung zwischen den beiden Stellgliedern, bzw. zwischen Lenkhandhabe und gelenkten Fahrzeugrädern, erhält der Fahrer ein besonders gutes Gefühl für die an den gelenkten Fahrzeugrädern herrschenden Kräfte und somit für die befahrene Straße. Dabei bewirkt das durch den Proportionalitätsfaktor erzeugte Übersetzungsverhältnis zwischen den an den beiden Stellgliedern (Lenkhandhabe und gelenkte Fahrzeugräder) wirkenden Kräften eine Servounterstützung der Lenkung.

Bei einer besonders vorteilhaften Ausführungsform des erfindungsgemäßen Regelungssystems kann sich der im Kraftsollwertgenerator des einen Kraftregelkreises vorgegebene Zusammenhang zwischen Stellpositionen und Stellkräften des zugehörigen Stellgliedes von dem Zusammenhang unterscheiden, der im Kraftsollwertgenerator des anderen Kraftregelkreises für die Stellpositionen und Stellkräfte des entsprechenden anderen Stellgliedes vorgegeben ist. Diese Maßnahme bewirkt ein Übersetzungsverhältnis zwischen den Stellbewegungen des einen Stellgliedes, z. B. der Lenkhandhabe, und den Verstellbewegungen des anderen Stellgliedes, z.B. der gelenkten Fahrzeugräder. Die Anpassbarkeit des erfindungsgemäßen Regelungssystems an unterschiedliche Anwendungsfälle wird dadurch erheblich vergrößert. Beispielsweise kann das Regelungssystem dadurch besonders gut an die bei einer Fahrzeuglenkung herrschenden Bedingungen angepaßt werden, um das Regelungssystem in einem Steer-by-wire-Lenksystem zu verwenden. In der Regel ist bei einem Fahrzeug der an der Lenkhandhabe eingestellte Lenkwinkel erheblich größer als der zugehörige, von den gelenkten Fahrzeugrädern eingenommene Lenkwinkel, so daß eine Übersetzung zwischen den Stellbewegungen dieser Stellglieder erforderlich ist. Anstelle einer aufwendigen Mechanik wird diese Übersetzung hier durch einen entsprechend, z.B. durch einen Korrekturfaktor, angepassten Zusammenhang zwischen Stellposition und Stellkraft bei wenigstens einem der Stellglieder erreicht.

Bei einer vorteilhaften Ausführungsform kann der Proportionalitätsfaktor in Abhängigkeit von Parametern variiert werden, wodurch das Kraftübersetzungsverhältnis zwischen den Kraftregelkreisen von Parametern abhängig gemacht werden kann. Beispielsweise kann bei einer bevorzugten Ausführungsform dadurch die Fahrzeuglenkung bei relativ hohen Fahrzeuggeschwindigkeiten mit wenig Servounterstützung, das heißt, relativ schwergängig, und bei relativ geringen Fahrzeuggeschwindigkeiten, z.B. für einen Rangierbetrieb, mit großer Servounterstützung, das heißt, relativ leichtgängig, arbeiten.

Gemäß einer Weiterbildung des erfindungsgemäßen Regelungssystems kann der Zusammenhang zwischen den Stellpositionen und den Stellkräften des Stellgliedes in dem einen Kraftregelkreis und/oder in dem anderen Kraftregelkreis in Abhängigkeit von Parametern variierbar sein. Bei diesen Ausführungsformen können beispielsweise bei einer Anwendung des Regelungssystem in einem Steer-by-wire-Lenksystem eines Fahrzeuges Masse-Feder-Dämpfungs-Kennlinien in das Lenksystem eingebunden werden, durch die z.B. eine selbsttätige Rückstellung der gelenkten Fahrzeugrädern in deren Mittelstellung gewährleistet werden kann. Ebenso ist es durch diese Ausführungsformen möglich, vorzugsweise in Abhängigkeit der Fahrzeuggeschwindigkeit, das Übersetzungsverhältnis der Stellgliederbewegungen, das heißt die Zuordnung von Lenkradeinschlagwinkeln und Fahrzeugradeinschlagwinkeln zu verändern.

Das in vorliegender Beschreibung über "Kräfte" gesagte gilt in entsprechender Weise auch für "Momente", insbesondere können an den Stellgliedern anstelle der Kräfte ebenso Momente abgegriffen bzw. eingeleitet werden.

Weitere wichtige Merkmale und Vorteile des erfindungsgemäßen Regelungssystems ergeben sich aus den Unteransprüchen, aus der Zeichnung und aus der zugehörigen Figurenbeschreibung anhand der Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in der Zeichnung dargestellt und wird in der nachfolgenden Beschreibung näher erläutert.

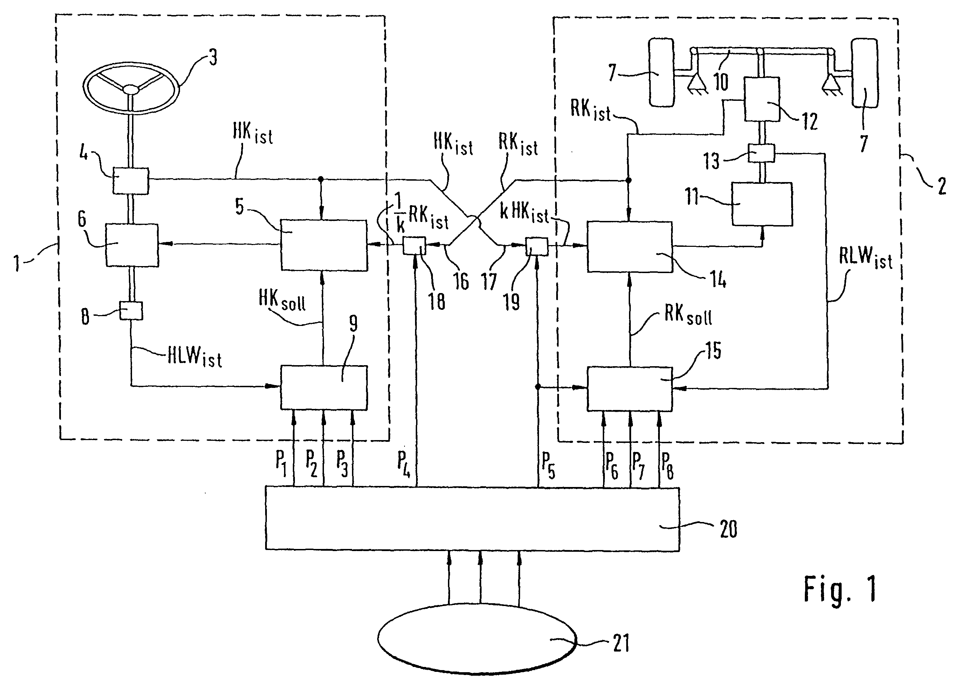

Fig. 1 zeigt eine schematische Prinzipdarstellung eines Steer-by-wire-Lenksystems für ein Kraftfahrzeug, das auf der Basis des erfindungsgemäßen Regelungssystems aufgebaut ist.

Entsprechend Fig. 1 weist ein erfindungsgemäßes FahrzeugLenksystem für einen Steer-by-wire-Modus einen ersten Kraftregelkreis, nämlich einen Handkraft-Regelkreis 1, auf, der in Fig. 1 durch eine mit unterbrochenen Linien gebildete Umrandung gekennzeichnet ist. Darüber hinaus weist das erfindungsgemäße Lenksystem einen zweiten Kraftregelkreis, nämlich einen Radkraft-Regelkreis 2, auf, der in Fig. 1 ebenfalls durch eine mit unterbrochenen Linien dargestellte Umrandung hervorgehoben ist.

Der Handkraft-Regelkreis 1 enthält als Stellglied eine Lenkhandhabe 3, die im Ausführungsbeispiel durch ein Lenkhandrad gebildet ist. Die Lenkhandhabe 3 kann ebenso durch einen Steuerknüppel oder Sidestick gebildet sein. Die Lenkhandhabe 3 ist mit einem Handkraft-Istwertgeber 4 gekoppelt, der bei Betätigung durch die Lenkhandhabe 3 ein Handkraft-Istwertsignal $HK_{ist}$ einem Handkraft-Regler 5 zuleitet.

Die Lenkhandhabe 3 ist mit einem Handkraft-Steller 6 gekoppelt, der zur Realisierung einer haptischen Wirkung an der Lenkhandhabe 3 dient. Diese haptische Wirkung soll im wesentlichen die an lenkbaren Fahrzeugrädern 7 herrschenden Kräfte widerspiegeln, um dem Fahrer ein realistisches Gefühl für den aktuellen Fahrzustand des Fahrzeuges zu geben.

Mit der Lenkhandhabe 3 ist außerdem ein Handlenkwinkel-Istwertgeber 8 gekoppelt, der von der Lenkhandhabe 3 betätigt ist und mit deren Stellposition korrelierende Handlenkwinkel-Istwertsignale $HLW_{ist}$ erzeugt und diese einem Handkraft-Sollwertgeber 9 zuleitet. In diesem Handkraft-Sollwertgeber 9 wird dem eingangsseitigen Handlenkwinkel-Istwertsignal $HLW_{ist}$ in Abhängigkeit eines vorgegebenen Zusammenhanges zwischen Handlenkwinkeln und Handkräften ausgangsseitig ein Handkraft-Sollwertsignal $HK_{soll}$ zugeordnet, das an den Handkraftregler 5 weitergeleitet wird.

Der Radkraft-Regelkreis 2 ist analog aufgebaut. Dementsprechend sind die gelenkten Fahrzeugräder 7 über ein Lenkgestänge 10 mit einem Radkraft-Steller 11 gekoppelt, der die gelenkten Fahrzeugräder 7 zu deren Verstellung antreibt. Außerdem sind mit den gelenkten Fahrzeugrädern 7 ein Radkraft-Istwertgeber 12 sowie ein Radlenkwinkel-Istwertgeber 13 gekoppelt. Während der Radkraft-Istwertgeber 12 ein mit den an den gelenkten Fahrzeugrädern 7 herrschenden Kräften korrelierendes Radkraft-Istwertsignal $RK_{ist}$ generiert und an einen Radkraft-Regler 14 weiterleitet, generiert der Radlenkwinkel-Istwertgeber 13 ein mit der Stellposition der gelenkten Fahrzeugräder 7 korrelierendes Radlenkwinkel-Istwertsignal $RLW_{ist}$ und leitet dieses einem Radkraft-Sollwertgenerator 15 zu. Dieser Radkraft-Sollwertgenerator 15 generiert in Abhängigkeit eines vorgegebenen Zusammenhanges zwischen Radlenkwinkeln und Radkräften ein Radkraft-Sollwertsignal $RK_{soll}$ und leitet dieses dem Radkraft-Regler 14 zu.

Die beiden Regelkreise 1 und 2 sind über zwei Kopplungsleitungen, nämlich über eine Rad-Hand-Kopplungsleitung 16 und über eine Hand-Rad-Kopplungsleitung 17, miteinander gekoppelt, indem die Kraft-Istwerte des einen Regelkreises 1 bzw. 2 jeweils dem Regler 14 bzw. 5 des anderen Regelkreises 2 bzw. 1 zugeführt werden. Um die von den einzelnen Kraft-Regelkreisen 1 und 2 geregelten Kräfte (Handkräfte und Radkräfte) aufeinander abzustimmen, ist in der Rad-Hand-Kopplungsleitung 16 ein Rad-Hand-Kopplungsglied 18 und in der Handrad-Kopplungsleitung 17 ein Hand-Rad-Kopplungsglied 19 angeordnet. Über diese Kopplungsglieder 18 und 19 wird ein Kraft-Übersetzungsverhältnis zwischen den an den gelenkten Fahrzeugrädern 7 und den an der Lenkhandhabe 3 auftretenden Kräften definiert. Beispielsweise werden die Handkraft-Istwertsignale $HK_{ist}$ im Hand-Rad-Kopplungsglied 19 mit einem Faktor k multipliziert, bevor sie als $k \cdot HK_{ist}$ dem Radkraft-Regler 14 zugeleitet werden. In entsprechender Weise werden die Radkraft-Istwertsignale $RK_{ist}$ im Rad-Hand-Kopplungsglied 18 durch diesen Faktor k dividiert, bevor sie dem Handkraft-Regler 5 als $\frac{1}{k} \cdot RK_{ist}$ zugeleitet werden. Die Kopplungsglieder 18 und 19 bzw. deren Funktionen können auch in den Handkraft-Regler 5 bzw. in den Radkraft-Regler 14 integriert sein.

Darüber hinaus ist das erfindungsgemäße Lenksystem mit einem Lenkungsparametergenerator 20 ausgestattet, der beispielsweise aus einer Sensorik oder aus einem Bordrechner 21 des mit der erfindungsgemäßen Lenkung ausgestatteten Fahrzeuges Informationen über den aktuellen Betriebszustand des Fahrzeuges erhält. Der Lenkungsparametergenerator 20 generiert dann aus diesen Fahrzeugbetriebszuständen Parameter P, die das Lenkverhalten des Lenksystems beeinflussen. Beispielsweise werden Parameter $P_1$ bis $P_3$ dem Handkraft-Sollwertgeber 9 zugeleitet, um dort in Abhängigkeit bestimmter Fahrzeugbetriebszustände (z.B. Fahrzeuggeschwindigkeit, Fahrzeugmasse, Fahrzeugquerbeschleunigung) den Zusammenhang zwischen Handlenkwinkeln und Handkräften zu variieren. Weitere Parameter $P_4$ und $P_5$ wirken auf die Kopplungsglieder 18 bzw. 19 ein, um dort beispielsweise geschwindigkeitsabhängig den Proportionalitätsfaktor k zu variieren. Auf diese Weise kann einerseits das Übersetzungsverhältnis zwischen Handkräften und Radkräften und somit die Servounterstützung und andererseits das Verhältnis zwischen Handlenkwinkeln und Radlenkwinkeln und somit die Lenkübersetzung variiert werden. Außerdem kann der Lenkungsparametergenerator 20 mit den Parametern $P_5$ - $P_8$ auf den Radkraft-Sollwertgenerator 15 einwirken, um dort den Zusammenhang zwischen Radlenkwinkeln und Radkräften zu verändern. Durch diese Parameterbeeinflußung kann z. B. eine von der Fahrzeuggeschwindigkeit abhängige Masse-Feder-Dämpfungs-Kennlinie realisiert werden. Auch kann die Lenkübersetzung bei einem variablen Kraft-Übersetzungsverhältnis konstant gehalten werden, oder ebenfalls in Abhängigkeit z.B. der Geschwindigkeit variiert werden.

Das erfindungsgemäße Lenkungssystem arbeitet wie folgt:

Wenn der Fahrzeugführer die Lenkhandhabe 3 betätigt, wird dieser Betätigung durch den Handlenkwinkel-Istwertgenerator 8 ein Handlenkwinkel-Istwertsignal $HLW_{ist}$ zugeordnet und dem Handkraft-Sollwertgenerator 9 zugeleitet. Dieser generiert ein Handkraft-Sollwertsignal $HK_{soll}$ für diejenige Handkraft, die bei der eingestellten Position der Lenkhandhabe 3 an dieser spürbar sein soll, und leitet dieses dem Handkraft-Regler 5 zu. Gleichzeitig wird vom Handkraft-Istwertgenerator 4 ein Handkraft-Istwertsignal $HK_{ist}$ erzeugt das sowohl dem Handkraftregler 5 als auch über die Hand-Rad-Kopplungsleitung 17 und durch das Hand-Rad-Kopplungsglied 19 als angepaßtes Handkraft-Istwertsignal $k \cdot HK_{ist}$ dem Radkraft-Regler 14 zur Verfügung steht. Daraufhin leitet der Radkraft-Regler 14 eine Stellbetätigung der gelenkten Fahrzeugräder 7 ein, wobei der Radkraft-Istwertgeber 12 ein Radkraft-Istwertsignal $RK_{ist}$ erzeugt und einerseits dem Radkraft-Regler 14 und andererseits über die Rad-Hand-Kopplungsleitung 16 und durch das Rad-Hand-Kopplungsglied 18 als angepaßtes Radkraft-Istwertsignal $\frac{1}{k} \cdot RK_{ist}$ an den Handkraft-Regler 5 weiterleitet. Im Handkraft-Regler 5 wird nun aus dem Handkraft-Istwertsignal $HK_{ist}$ aus dem angepaßten Radkraft-Istwertsignal $\frac{1}{k} \cdot RK_{ist}$ und aus dem Handkraft-Sollwertsignal $HK_{soll}$ ein Steuerbefehl für den Handkraftsteller 6 ermittelt, der dann an der Lenkhandhabe 3 eine Kraft erzeugt, die sowohl Rückstellkräfte der Lenkhandhabe 3 als auch Rückwirkungskräfte der gelenkten Fahrzeugräder 7 berücksichtigt. Radseitig wird außerdem durch den Radlenkwinkel-Istwertgeber 13 ein Radlenkwinkel-Istwertsignal $RLW_{ist}$ erzeugt, das dem Radkraft-Sollwertgeber 15 zugeleitet wird und von diesem zu einem Radkraft-Sollwertsignal $RK_{soll}$ verarbeitet wird, welches derjenigen Kraft entspricht, die an den gelenkten Fahrzeugrädern 7 bei dem detektierten Radlenkwinkel herrschen soll.

Durch die erfindungsgemäße Kopplung der Kraft-Regelkreise 1 und 2 über die Kraft-Istwerte stellt sich zwischen den gelenkten Fahrzeugrädern 7 und der Lenkhandhabe 3 eine direkt, schnell und exakt arbeitende Kopplung ein, die haptisch einer mechanischen Zwangskopplung entspricht.

**Patentansprüche**

1. Regelungssystem zur Kopplung von zwei Stellgliedern (3, 7) hinsichtlich Stellposition und Stellkraft, umfassend zwei Kraft-Regelkreise (1, 2) mit

   - jeweils einem Stellglied (3, 7), das jeweils einen Kraft-Istwertgeber (4, 12) zur Erzeugung eines mit an dem Stellglied (3, 7) herrschenden Stellkräften korrelierenden Kraft-Istwertsignals ($HK_{ist}$, $RK_{ist}$) sowie jeweils einen Positions-Istwertgeber (8, 13) zur Erzeugung eines mit der am Stellglied (3, 7) eingestellten Stellposition korrelierenden Positions-Istwertsignals ($HLW_{ist}$, $RLW_{ist}$) betätigt,

- jeweils einem Kraft-Sollwertgenerator (9, 15), der in Abhängigkeit eines vorgegebenen Zusammenhanges zwischen Stellpositionen und Stellkräften aus dem Positions-Istwertsignal ($HLW_{ist}$, $RLW_{ist}$) ein Kraft-Sollwertsignal ($HK_{soll}$, $RK_{soll}$) generiert,
- jeweils einem Kraftregler (5, 14), der in Abhängigkeit der an einem Eingang des Kraftregler (5, 14) anliegenden Kraftsignale ($HK_{ist}$, $HK_{soll}$, $RK_{ist}$, $RK_{soll}$) einen Kraftsteller (6, 11) betätigt, derart, daß sich am Stellglied (3, 7) der vorgegebene Zusammenhang zwischen Stellpositionen und Stellkräften einstellt,
- die Kraft-Istwertsignale ($HK_{ist}$) des einen Kraftregelkreises (1) sind auch dem Eingang des Kraftreglers (14) des anderen Kraftregelkreises (2) und die Kraft-Istwertsignale ($RK_{ist}$) des anderen Kraftregelkreises (2) sind auch dem Eingang des Kraftreglers (5) des einen Kraftregelkreises (1) zugeleitet,

**gekennzeichnet durch** folgende Merkmale:

- die Kraft-Istwertsignale ($HK_{ist}$) des einen Kraftregelkreises (1) werden vor deren Einleitung in den anderen Kraftregelkreis (2) mit einem Proportionalitätsfaktor (k) multipliziert und
- die Kraft-Istwertsignale ($RK_{ist}$) des anderen Kraftregelkreises (2) werden vor deren Einleitung in den einen Kraftregelkreis (1) **durch** den Proportionalitätsfaktor (k) dividiert.

2. Regelungssystem nach Anspruch 1,
   **dadurch gekennzeichnet,**
   **daß** in einer ersten Kopplungsleitung (17), die den Kraft-Istwertgeber (4) des einen Kraftregelkreises (1) ausgangsseitig mit dem Eingang des Kraftreglers (14) des anderen Kraftregelkreises (2) verbindet, ein erstes Kopplungsglied (19) angeordnet ist, das die Multiplikation der Kraft-Istwertsignale ($HK_{ist}$) des einen Kraftregelkreises (1) mit dem Proportionalitätsfaktor (k) durchführt, und daß in einer zweiten Kopplungsleitung (16), die den Kraft-Istwertgeber (12) des anderen Kraftregelkreises (2) ausgangsseitig mit dem Eingang des Kraftreglers (5) des einen Kraftregelkreises (1) verbindet, ein zweites Kopplungsglied (18) angeordnet ist, das die Division der Kraft-Istwertsignale ($RK_{ist}$) des anderen Kraftregelkreises (2) durch den Proportionalitätsfaktor (k) durchführt.

3. Regelungssystem nach Anspruch 1 oder 2,
   **dadurch gekennzeichnet,**
   **daß** im Kraft-Sollwertgenerator (9) des einen Kraftregelkreises (1) ein anderer Zusammenhang zwischen Stellpositionen und Stellkräften gewählt ist als im Kraft-Sollwertgenerator (15) des anderen Kraftregelkreises (2).

4. Regelungssystem nach einem der Ansprüche 1 bis 3,
   **dadurch gekennzeichnet,**
   **daß** der Proportionalitätsfaktor (k) in Abhängigkeit von Parametern (P) variierbar ist.

5. Regelungssystem nach einem der Ansprüche 1 bis 4,
   **dadurch gekennzeichnet,**
   **daß** der Zusammenhang zwischen Stellpositionen und Stellkräften in dem einen Kraftregelkreis (1) und/oder in dem anderen Kraftregelkreis (2) in Abhängigkeit von Parametern (P) variierbar ist.

6. Regelungssystem nach Anspruch 4 oder 5,
   **dadurch gekennzeichnet,**
   **daß** ein Kopplungsparametergenerator (20) vorgesehen ist, der in Abhängigkeit von Betriebsparametern einer das Regelungssystem enthaltenden Einrichtung Parameter (P) generiert und diese den Kopplungsgliedern (18, 19) und/oder dem Kraft-Sollwertgenerator (9, 15) des einen und/oder des anderen Regelkreises (1, 2) zuleitet.

7. Verwendung eines Regelungssystems nach einem der Ansprüche 1 bis 6 für eine Steer-by-wire-Lenkung eines Kraftfahrzeuges, wobei mindestens eine Lenkhandhabe (3) des Kraftfahrzeuges, z.B. Lenkhandrad oder Sidestick, dem Stellglied des einen Kraftregelkreises (1) entspricht und wobei wenigstens ein gelenktes Fahrzeugrad (7) des Kraftfahrzeuges dem Stellglied des anderen Kraftregelkreises (2) entspricht.

**Claims**

1. Control system for the coupling of two actuators (3, 7) in respect of actuating position and actuating force, comprising two force control circuits (1, 2) with

   - in each case one actuator (3, 7) which in each case actuates one force actual value transmitter (4, 12) to generate a force actual value signal ($HK_{actual}$, $RK_{actual}$) correlating with actuating forces prevailing at the actuator (3, 7), and also in each case one position actual value transmitter (8, 13) to generate a position actual value signal ($HLW_{actual}$, $RLW_{actual}$) correlating with the actuating position set at the actuator (3, 7),
   - in each case one force desired value generator (9, 15) which, depending on a preset relationship between actuating positions and actuating forces, generates a force desired value signal ($HK_{desired}$, $RK_{desired}$) from the position actual value signal ($HLW_{actual}$, $RLW_{actual}$),

- in each case one force controller (5, 14) which, depending on the force signals ($HK_{actual}$, $HK_{desired}$, $RK_{actual}$, $RK_{desired}$) present at an input of the force controller (5, 14), actuates a force adjuster so that the preset relationship between actuating positions and actuating forces is set at the actuator (3, 7),
- the force actual value signals ($HK_{actual}$) of the one force control circuit (1) are also fed to the input of the force controller (14) of the other force control circuit (2), and the force actual value signals ($RK_{actual}$) of the other force control circuit (2) are also fed to the input of the force controller (5) of the one force control circuit (1),

**characterised by** the following features:

- before introduction into the other force control circuit (2), the force actual value signals ($HK_{actual}$) of the one force control circuit (1) are multiplied by a proportionality factor (k) and
- before introduction into the one force control circuit (1), the force actual value signals ($RK_{actual}$) of the other force control circuit (2) are divided by the proportionality factor (k).

2. Control system according to claim 1,
   **characterised in that**
   in a first coupling line (17) which links the force actual value transmitter (4) of the one force control circuit (1) on the output side with the input of the force controller (14) of the other force control circuit (2) there is located a first coupling element (19) which undertakes the multiplication of the force actual value signals ($HK_{actual}$) of the one force control circuit (1) by the proportionality factor (k), and that in a second coupling line (16) which links the force actual value transmitter (12) of the other force control circuit (2) on the output side with the input of the force controller (5) of the one force control circuit (1) there is located a second coupling element (18) which undertakes the division of the force actual value signals ($RK_{actual}$) of the other force control circuit (2) by the proportionality factor (k).

3. Control system according to claim 1 or 2,
   **characterised in that**
   in the force desired value generator (9) of the one force control circuit (1), the relationship between actuating positions and actuating forces which is selected differs from that in the force desired value generator (15) of the other force control circuit (2).

4. Control system according to any of claims 1 to 3,

**characterised in that**
the proportionality factor (k) may be varied on the basis of parameters (P).

5. Control system according to any of claims 1 to 4,
   **characterised in that**
   the relationship between actuating positions and actuating forces in the one force control circuit (1) and/or in the other force control circuit (2) may be varied on the basis of parameters (P).

6. Control system according to claim 4 or 5,
   **characterised in that**
   there is provided a coupling parameter generator (20) which, on the basis of operating parameters of a device containing the control system, generates parameters (P) which it feeds to the coupling elements (18, 19) and/or the force desired value generator (9, 15) of the one and/or the other control circuit (1, 2).

7. Use of a control system according to any of claims 1 to 6 for a steer-by-wire system for a motor vehicle, wherein one or more steering devices (3) of the motor vehicle, e.g. steering handwheel or joystick, corresponds to the actuator of the one force control circuit (1), and wherein one or more steered vehicle wheels (7) of the motor vehicle corresponds to the actuator of the other force control circuit (2).

**Revendications**

1. Système de régulation pour le couplage de deux éléments réglants (3, 7) au point de vue position donnée et force appliquée, comportant deux circuits de régulation de la force (1, 2) comprenant :

   - chacun un élément réglant (3, 7) qui manoeuvre respectivement un émetteur de la valeur réelle de la force (4, 12) pour produire un signal de la valeur réelle de la force (HKréel, RKréel) en corrélation avec des forces appliquées sur l'élément réglant (3, 7) ainsi que, respectivement, un émetteur de la valeur réelle de la position (8, 13) pour produire un signal de la valeur réelle de la position (HLWréel, RLWréel) en corrélation avec la position donnée à l'élément réglant (3, 7),

   - chacun un générateur de la valeur prescrite de la force (9, 15) qui, en fonction d'une relation prescrite entre des positions données et des forces appliquées, génère, à partir du signal de la valeur réelle de la position (HLWréel, RLWréel), un signal de la valeur prescrite de la force (Hkpresc., Rkpresc.),

- chacun un organe de régulation de la force (5, 14) qui, en fonction des signaux de la force (HKréel, Hkpresc., RKréel, Rkpresc.) présents à une entrée de l'organe de régulation de la force (5, 14), manoeuvre un organe réglant de la force (6, 11) de façon que le rapport prescrit entre des positions données et des forces appliquées s'affiche sur l'élément réglant (3, 7),

- les signaux de la valeur réelle de la force (HKréel) du premier circuit de régulation de la force (1) sont également amenés à l'entrée de l'organe de régulation de la force (14) de l'autre circuit de régulation de la force (2) et les signaux de la valeur réelle de la force (HKréel) de l'autre circuit de régulation de la force (2) sont également amenés à l'entrée de l'organe de régulation de la force (5) du premier circuit de régulation de la force (1),

**caractérisé par** les caractéristiques suivantes :

- avant leur introduction dans l'autre circuit de régulation de la force (2), les signaux de la valeur réelle de la force (HKréel) du premier circuit de régulation de la force (1) sont multipliés par un facteur de proportionnalité (k) et

- avant leur introduction dans le premier circuit de régulation de la force (1), les signaux de la valeur réelle de la force (HKréel) de l'autre circuit de régulation de la force (2) sont divisés par le facteur de proportionnalité (k).

2. Système de régulation selon la revendication 1, **caractérisé par le fait que** dans un premier conducteur de couplage (17), qui relie l'émetteur de la valeur réelle de la force (4) du premier circuit de régulation de la force (1), côté sortie, avec l'entrée de l'organe de régulation de la force (14) de l'autre circuit de régulation de la force (2), est disposé un premier élément de couplage (19) qui exécute la multiplication des signaux de la valeur réelle de la force (HKréel) du premier circuit de régulation de la force (1) par le facteur de proportionnalité (k), et que dans un second conducteur de couplage (16), qui relie l'émetteur de la valeur réelle de la force (12) de l'autre circuit de régulation de la force (2), côté sortie, avec l'entrée de l'organe de régulation de la force (5) du premier circuit de régulation de la force (1), est disposé un second élément de couplage (18) qui exécute la division des signaux de la valeur réelle de la force (HKréel) de l'autre circuit de régulation de la force (2) par le facteur de proportionnalité (k).

3. Système de régulation selon la revendication 1 ou 2, **caractérisé par le fait que** dans le générateur de la valeur prescrite de la force (9) du premier circuit de régulation de la force (1) est sélectionnée, entre positions données et forces appliquées, une relation autre que dans le générateur de la valeur prescrite de la force (15) de l'autre circuit de régulation de la force (2).

4. Système de régulation selon l'une des revendications 1 à 3, **caractérisé par le fait que** le facteur de proportionnalité (k) peut varier en fonction de paramètres (P).

5. Système de régulation selon l'une des revendications 1 à 4, **caractérisé par le fait que** la relation entre positions données et forces appliquées dans le premier circuit de régulation de la force (1) et/ou dans l'autre circuit de régulation de la force (2) peut varier en fonction de paramètres (P).

6. Système de régulation selon la revendication 4 ou 5, **caractérisé par le fait qu'**est prévu un générateur de paramètres de couplage (20) qui, en fonction de paramètres de fonctionnement d'un dispositif contenant le système de régulation, génère des paramètres (P) et les envoie aux éléments de couplage (18, 19) et/ou au générateur de la valeur prescrite de la force (9, 15) du premier et/ou de l'autre circuit de régulation de la force (1, 2).

7. Emploi d'un système de régulation selon l'une des revendications 1 à 6, pour une direction Steer-by-wire/direction par conducteur électrique d'un véhicule motorisé, dans lequel au moins un organe de braquage (3) du véhicule motorisé, par exemple un volant ou un levier latéral, correspond à l'élément réglant du premier circuit de régulation de la force (1) et dans lequel au moins une roue braquée (7) du véhicule motorisé correspond à l'élément réglant de l'autre circuit de régulation de la force (2).

Fig. 1

EP 1 073 577 B1